Europäisches Patentamt
European Patent Office
Office européen des brevets

(19)

(11) Publication number : **0 280 431 B1**

(12) **EUROPEAN PATENT SPECIFICATION**

(45) Date of publication of patent specification : **24.04.91 Bulletin 91/17**

(51) Int. Cl.[5] : **A01N 55/00,** // (A01N55/00, 47:38)

(21) Application number : **88301022.5**

(22) Date of filing : **08.02.88**

(54) **Fungicidal mixtures with prochloraz.**

(30) Priority : **07.02.87 GB 8702814**

(43) Date of publication of application : **31.08.88 Bulletin 88/35**

(45) Publication of the grant of the patent : **24.04.91 Bulletin 91/17**

(84) Designated Contracting States : **AT BE CH DE ES FR GB GR IT LI LU NL SE**

(56) References cited : **EP-A- 0 040 007**
**G. HAUG et al.: "Chemistry of plant protection", vol. 1, 1986, pages 76-81, Springer Verlag, Berlin, DE; T. KATO et al.: "Sterol biosynthesis inhibitors and anti-feeding compounds"**

(73) Proprietor : **SCHERING AGROCHEMICALS LIMITED**
**Hauxton Cambridge CB2 5HU (GB)**

(72) Inventor : **Williams, Robin John**
**19 Regatta Court**
**Oyster Row Cambridge CB5 8NS (GB)**

(74) Representative : **Waldman, Ralph David et al**
**Schering Agrochemicals Limited Industrial Property Department Chesterford Park Research Station**
**Saffron Walden Essex CB10 1XL (GB)**

**EP 0 280 431 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to compositions with useful fungicidal properties, based on the fungicides, prochloraz and flusilazole.

In EP-A-0040007, it is disclosed that prochloraz and its salts and complexes with metal salts form synergistic mixtures with certain triazole fungicides. Since that patent was filed, numerous triazole fungicides have been disclosed and out of the vast number of such fungicides, there is no way of predicting which will form a synergistic mixture with prochloraz. We have found that a recently commercialised fungicide, having the common name flusilazole will form fungicidal mixtures with prochloraz.

The present invention provides a fungicidal composition comprising

a) prochloraz and

b) flusilazole, in synergistic mixture,

the ratio of prochloraz to flusilazole being in the range 5 : 1 to 1 : 5 especially 2 : 1 to 1 : 5.

These ratios are based on the weights of the free base.

Prochloraz is the common name for 1-[N-propyl-N-2-(2,4,6-trichlorophenoxy)ethylcarbamoyl]imidazole, and that name is used in the specification to also include metal complexes of this compound. Metal complexes of prochloraz are described in our British Patent 1,567,521 and a particularly preferred complex is that formed with manganous chloride in which the molar ration of prochloraz to manganese is 4 : 1. However, generally, the prochloraz is present as the free base. Flusilazole is the common name for bis(4-fluorophenyl)methyl(1H-2,4-triazole-1-ylmethyl)silane.

In addition other pesticides may be employed in conjunction with the active ingredients described above providing they do not adversely affect the interaction between the fungicidal components. For example, it is sometimes useful to include additional fungicides, which extend the range of activity in order to control a wider spectrum of fungi.

The compositions of the invention are active against a wide range of fungi, e.g. powdery mildew (Erysiphe graminis) on cereal crops such as wheat, barley, oats and rye and other foliar diseases such as glume blotch (Septoria nodorum), leaf blotch (Rhynchosporium secalis), eyespot (Pseudocercosporella herpotrichoides) and rust (e.g. Puccinia graminis). Certain compositions of the present invention can be used to control seed borne organisms such as bunt (Tilletia caries) on wheat, loose smut (Ustilago nuda and Ustilago hordei) on barley and oats, leaf spot (Pyrenophora avenae) on oats and leaf stripe (Pyrenophora graminis) on barley. The compositions can also be applied to rice for control of rice blast (Pyricularia oryzae), to horticultural crops such as apple trees for the control of apple scab (Venturia inaequalis), roses and other ornamentals for the control of powdery mildew (Sphaerotheca pannosa), rust and black spot, to cucurbits for the control of Botrytis cinerea, to turf for the control of dollar spot (Sclerotinia homeocarpa) and to stored produce for the control of storage rot organisms of citrus fruit, potatoes, sugar beet, apples, pears etc., (e.g., Penicillium spp., Aspergillus spp. and Botrytis spp.). Other diseases that may be combated include Helminthosporium spp., Fusarium spp., e.g. Fusarium avanaceum, and Cercospora spp.

The compositions of the invention may be employed in many forms and are often most conveniently prepared in aqueous form immediately prior to use. One method of preparing such a composition is referred to as "tank mixing" in which the ingredients in their commercially available form are mixed together by the user in a quantity of water.

In addition to tank mixing immediately prior to use the compositions containing prochloraz and flusilazole may be formulated into a more concentrated primary composition which is diluted with water or other diluent before use. Such compositions may comprise a surface active agent in addition to the active ingredients and examples of such compositions are as follows.

It can be a dispersible solution which comprises the active ingredients dissolved solution which comprises the active ingredients dissolved in a water-miscible solvent with the addition of a dispersing agent. Alternatively it can comprise the ingredients in the form of a finely ground powder in association with a dispersing agent and intimately mixed with water to give a paste or cream which can if desired be added to an emulsion of oil in water to give a dispersion of active ingredients in an aqueous oil emulsion.

An emulsifiable concentrate comprises the active ingredient dissolved in a water-immiscible solvent which is formed into an emulsion with water in the presence of an emulsifying agent.

A granular solid comprises the active ingredients associated with powder diluents such as kaolin, which mixture is granulated by known methods. Alternatively it comprises the active ingredients adsorbed or absorbed on a pre-granular diluent, for example Fuller's earth, attapulgite or limestone grit.

A dispersible or wettable powder usually comprises the active ingredients in admixture with a suitable surfactant and an inert powder diluent such as china clay.

Another suitable concentrate is a flowable suspension concentrate which is formed by grinding the active ingredients with water, a wetting agent and a suspending agent.

In some circumstances it may be desirable to combine two types of formulation e.g. one of the components is present in an emulsifiable concentrate and the second components is dispersed as a powder in this concentrate.

The concentrate of the active ingredients (when used as the sole active components) in a composition for direct application to the crop by conventional ground methods is preferably within the range of 0.001 to 10 per cent by weight of the composition, especially 0.005 to 5 per cent by weight, but more concentrated compositions containing up to 40 per cent may be desirable in the case of aerial sprays.

As a further aspect, the invention includes a method for controlling a phytopathogenic fungus which comprises applying to seeds, plants and other vegetative material or their habitat, prochloraz and flusilazole either together or in sequence. Preferably, they are applied directly at the time of drilling of seeds so that the active composition controls the growth of fungi which attack the seed. A suitable application rate is within the range of from 0.025 to 10 kilogram per hectare, more preferably from 0.04 to 5.0 kilogram per hectare.

Alternatively the composition of the invention can be applied directly to plants by, for example, spraying or dusting either at the time which the fungus has begun to appear on the plant or before the appearance of fungus, as a protective measure. In both cases the preferred mode of application is by foliar spray. It is generally important to obtain good control of fungi in the early stages of plant growth as this is the time when the plant can be most severaly damaged. For cereal crops such as wheat, barley and oats it is often desirable to spray the plant at or before growth stage 6 (Feeke's scale), although additional treatments when the plant is more mature can augment resistance to the growth or spread of fungi. It may also sometimes be useful to treat the roots of a plant before or during planting, for example, by dipping the roots in a suitable liquid or solid composition. When the composition of the invention is applied directly to the plant a suitable rate of application is from 0.05 to 5 kilograms per hectare, preferably from 0.25 to 1.5 kilogram per hectare.

In a further method of the invention the composition of the invention can be applied to the seed in order to combat seed-borne diseases. This method is of particular use in the treatment of cereal grain against attack by, for example, leaf spot of oats, leaf stripe of barley, loose smut of barley, loose smut of oats, and bunt of wheat. If cereal grain is to be stored in a store room or container it is sometimes convenient to treat the store room or containers with a composition according to the invention instead of, or in addition to, treatment of the cereal grain itself. A suitable rate of application for a seed dressing is from 0.02 to 1.0 g per kilogram of seed, such as for example from 0.05 to 0.25 g per kilogram of seed.

A particular method of invention is one for controlling foliar diseases on a cereal crop, such as for example wheat, barley, oats or rye which comprises applying a composition of the invention to the crop. Preferably the mode of application is by foliar spray of the growing crop.

The invention is illustrated in the following Examples which describe in vitro experiments in which a synergistic effect was observed.

## Example 1

Prochloraz and flusilazole were incorporated into molten agar in amounts to give the required concentration of active ingredient in the agar. The molten agar was then poured into 8.5 cm. petri dishes and allowed to set. The agar in each dish was inoculated with an agar culture of Fusarium avenaceum and the dishes were incubated at 20°C. The colony diameters were then measured at various times and the percentage control of growth in comparison with the growth in a dish of agar, used as a standard, which had been similarly inoculated but contained no active ingredients, was calculated.

To indicate the existence of synergism between the active components the results were treated in the manner described by Colby S.R., "Calculating Synergistic and Antagonistic Responses of Herbicide Combinations" in Weeds 1967 15, 20-22). In this method the "expected" percent control of growth, E, of the combination compared with untreated control is given by the equation.

$$E = P + F - \frac{PF}{100}$$

where P is the % control by prochloraz, used alone at a given concentration and F is the % control by flusilazole, used alone at a given concentration. If the observed control of the mixture is greater than E the results indicate synergism. In Table I evidence of synergism is shown at the given rates.

Table I

| Concentration of prochloraz (mg/ml) | Concentration of flusilazole (mg/ml) | Observed percentage control | Expected percentage control (E) |
|---|---|---|---|
| 4 days after inoculation | | | |
| 0.1 | 0 | 20 | |
| | 0.05 | 20 | |
| 0 | 0.5 | 54 | |
| 0.1 | 0.05 | 58 | 36 |
| 0.1 | 0.5 | 66 | 63 |
| 7 days after inoculation | | | |
| 0.1 | 0 | 30 | |
| 0 | 0.05 | 24 | |
| 0 | 0.5 | 56 | |
| 0.1 | 0.05 | 56 | 47 |
| 0.1 | 0.5 | 74 | 69 |

Example 2

Example 1 was repeated using Pyricularia oxyzae as the fungus. Synergism was demonstrated as shown in Table 2.

Table 2

| Concentration of prochloraz (mg/ml) | Concentration of flusilazole (mg/ml) | Observed percentage control | Expected percentage control (E) |
|---|---|---|---|
| 7 days after inoculation | | | |
| 0.1 | 0 | 86 | |
| | 0.05 | 19 | |
| 0 | 0.5 | 60 | |
| 0.1 | 0.05 | 92 | 89 |
| 0.1 | 0.5 | 100 | 94 |
| 11 days after inoculation | | | |
| 0.1 | 0 | 68 | |
| 0 | 0.05 | 11 | |
| 0 | 0.5 | 44 | |
| 0.1 | 0.05 | 92 | 72 |
| 0.1 | 0.5 | 100 | 82 |

**Claims**

1. A fungicidal composition comprising
a) prochloraz or a metal complex thereof, and
b) flusilazole, in synergistic mixture,
the ratio of prochloraz to flusilazole being in the range 5 : 1 to 1 : 5 especially 2 : 1 to 1 : 5.

2. A method for controlling a phytopathogenic fungus which comprises applying to seeds, plants and other vegetative material or their habitat
a) prochloraz, or a metal complex thereof, and
b) flusilazol,
components (a) and (b) being applied either together or in sequence.

**Ansprüche**

1. Fungizide Wirkstoffkombination bestehend aus
a) Prochloraz und
b) Flusilazol in synergistischer Mischung
im Verhältnis von Prochloraz zu Flusilazol wie 5 : 1 bis 1 : 5, vorzugsweise 2 : 1 bis 1 : 5.

2. Verfahren zur Bekämpfung von phytopathogenen Pilzen durch Anwendung von
a) Prochloraz oder ein Metallkomplex davon und

b) Flusilazol,
wobei die Komponenten a) und b) entweder zusammen oder nacheinander auf Saatgut, Pflanzen und anderes vegetatives Material angewendet werden.

## Revendications

1. Composition fongicide comprenant :
a) du prochloraz ou un complexe métallique de celui-ci, et
b) du flusilazole en mélange synergique,
le rapport du prochloraz au flusilazole se situant dans l'intervalle de 5 : 1 à 1 : 5, et spécialement de 2 : 1 à 1 : 5.

2. Procédé pour combattre un champignon phytopathogène, qui comprend l'application sur les semences, les plantes ou une autre matière végétative ou bien leur habitat :
a) de prochloraz ou de complexe métallique de celui-ci, et
b) de flusilazole,
les composants a) et b) étant appliqués conjointement ou en succession.